# EUROPEAN PATENT APPLICATION

(11) **EP 2 314 866 A1**
(43) Date of publication of application: **27.04.2011**
(21) Application number: 10186744.8
(22) Date of filing: 06.10.2010
(51) Int. Cl.: F03D 1/00

(54) **Wind Turbine Blade With Foreign Matter Detection Devices**

(30) Priority: 14.10.2009 US 578900
(71) Applicant: General Electric Company, Schenectady, NY 12345 (US)
(72) Inventor: Pal, Sujan Kumar, 799155, Tripura (IN); Kumar, Vivek, 848302, Bihar (IN); Rao, Kavala Venkateswara, 534347, Andhra Pradesh (IN); Sharma, Manjul, 324001, Rajasthan (IN)
(74) Representative: Bedford, Grant Richard

(57) **Abstract**

A wind turbine (100) includes a wind turbine blade (108) and a foreign matter detection device (202) disposed on the wind turbine blade (108) for detecting an accumulation of foreign matter on the wind turbine blade (108). The detection device (202) automatically sends an indication (608) when a threshold level of foreign matter accumulation is detected. A wind farm control system can display a color coded live plot of all wind turbines in a wind farm system, with a indication of foreign matter accumulation for each turbine.

## Description

The present disclosure generally relates to wind turbines, and more particularly to the detecting of foreign matter accumulation on the surface of a rotor blade of a wind turbine. The expression "foreign matter" is generally intended to include any type of impurities that effect the performance, efficiency or power production of a wind turbine or wind farm. Examples of foreign matter can include, but are not limited to, any undesired matter or material that can stick to, build-up or accumulate on a wind turbine rotor blade, such as dust, dirt and bugs/insects.

Wind turbines have received increased attention as an environmentally safe and relatively inexpensive alternative energy source. With this growing interest, considerable efforts have been made to develop wind turbines that are reliable and efficient.

Generally, a wind turbine includes a rotor comprised of a hub and a plurality of blades mounted on the hub. The rotor is coupled to a generator through a gearbox. The generator is mounted within a housing or nacelle, which is positioned on top of a tubular tower. Utility grade wind turbines (i.e. wind turbines designed to provide electrical power to a utility grid) can have large rotors (e.g., thirty or more meters in diameter). Blades of such a rotor transform wind energy into a rotational torque or force that drives a generator. The rotor is supported by the tower through a bearing that includes a fixed portion coupled to a rotatable portion. The bearing is subject to a plurality of loads including the weight of the rotor, a moment load of the rotor that is cantilevered from the bearing, asymmetric loads, such as, horizontal and shears, yaw misalignment, and natural turbulence.

The accumulation or buildup of foreign matter on a surface of a wind turbine rotor blade may nagatively impact the performance of the wind turbine. Generally, this is reflected in power loss, and ultimately in Annual Energy Production (AEP). The AEP will decrease as foreign matter accumulates on the blade surface. It is suggested that due to the effect of foreign matter accumulating on a wind turbine rotor blade, there can be a 2-9 % reduction in Annual Energy Production.

At some point, when the user can no longer afford reduction in AEP due to the foreign matter accumulation, the blade(s) need to be cleaned. Generally, wind turbine blades are cleaned at regular time intervals to preempt any loss in AEP. The cleaning requirments or cycles are generally based on predictions. However, in some cases, wind turbine blades may need to be cleaned more or less frequently due to geometric and/or local external conditions. For example, turbines operating in hot weather extreme conditions tend to be more significantly affected by dust, dirt and other foreign matter than turbines operating in less severe environments. In other cases, some turbines do not need to be cleaned at the regular intervals, resulting in unecessry expenditures due to the high cost of wind turbine blade cleaning.

It can also be difficult to identify specific turbines for cleaning due to the number of turbines in a wind farm. While certain predictions can be made, this does not always result in an accurate assessment. For example, rain flow sensors have been used to determine turbine blade cleaning cycles. During rain, there can be a natural cleaning of the turbine blades. Rain flow sensors can be installed on the met mast to determine rain flow cycles and conditions. A general assumption is made that if there is no rainfall, and the windspeed is less than 6 meter per second, there is a chance of foreign matter buildup or accumulation on the turbine blade. However, these predicitions are not always accurate and can result in premature cleaning or a loss of AEP due to foreign matter buildup.

Accordingly, it would be desirable to provide a system that addresses at least some of the problems identified above.

As described herein, the exemplary embodiments address one or more of the above or other disadvantages known in the art.

One aspect of the exemplary embodiments relates to a wind turbine, which includes a wind turbine blade and a foreign matter detection device disposed on the wind turbine blade. The foreign matter detection device is configured to detect an accumulation of foreign matter on the wind turbine blade.

Another aspect of the exemplary embodiments relates to a wind farm system. The wind farm system includes a plurality of wind turbines. Each of the wind turbines includes a wind turbine blade rotatable about an axis upon an impact of a wind flow on the wind turbine blade, a foreign matter detection device disposed on the wind turbine blade, and a controller configured to receive foreign matter accumulation data from the foreign matter detection device and determine whether the wind turbine blade requires cleaning.

A further aspect of the exemplary embodiments relates to a method of monitoring foreign matter accumulation on a blade surface of a wind turbine blade. The method includes receiving an indication of a level of foreign matter accumulation on the blade surface from a foreign matter detection device disposed on the blade surface, and determining if the indicated level of foreign matter accumulation exceeds a threshold level.

Various aspects and advantages of the exemplary embodiments will become apparent from the following detailed description considered in conjunction with the accompanying drawings. It is to be understood, however, that the drawings are designed solely for purposes of illustration and not as a definition of the limits of the invention, for which reference should be made to the appended claims. Moreover, the drawings are not necessarily drawn to scale and unless otherwise indicated, they are merely intended to conceptually illustrate the structures and procedures described herein. In addition, any suitable size, shape or type of elements or materials could be used.

Various aspects and embodiments of the present invention will now be described in connection with the accompanying drawings, in which:
FIG. 1 shows a side elevational view of a wind turbine according to an embodiment of the present disclosure;
FIG. 2 shows a top perspective view of a wind turbine blade according to an embodiment of the present disclosure;
FIG. 3 is a perspective view of a section of the wind turbine blade of FIG. 2;
FIGS. 4A and 4B are schematic views of exemplary wind turbine blades according to embodiments of the present disclosure;
FIGS. 5A-5C are block diagrams of exemplary wind turbine control systems according to embodiments of the present disclosure;
FIG. 6 is a flow chart of a process according to an embodiment of the present disclosure; and
FIG. 7 is a block diagram of an apparatus that can be used to practice aspects of the present disclosure.

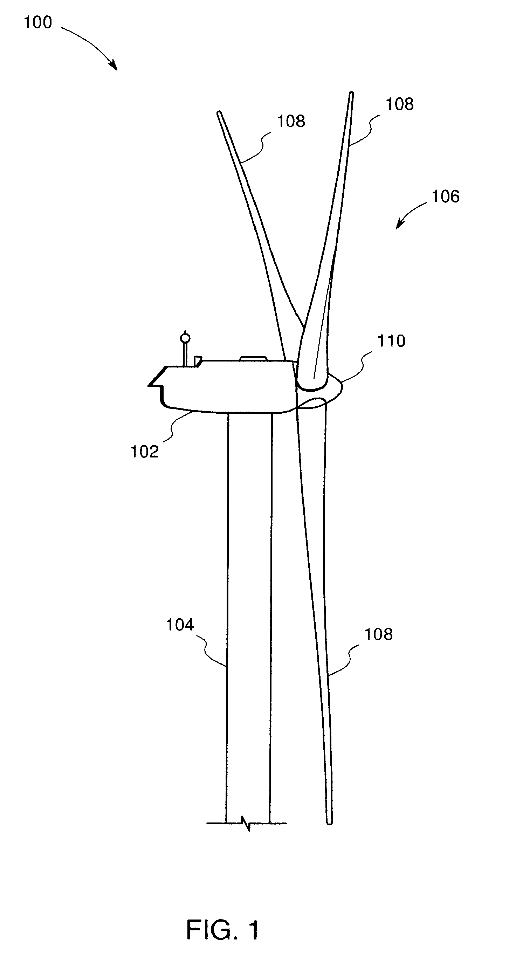

FIG. 1 illustrates an exemplary wind turbine 100 incorporating aspects of the disclosed embodiments. The aspects of the disclosed embodiments are generally directed to monitoring the accumulation or build-up of foreign matter on wind turbine rotor blades. Foreign matter detection sensors, also referred to herein as "dust detection" sensors, can monitor the level of foreign matter accumulation on the wind turbine blades. The detected level of foreign matter accumulation can be used to schedule cleaning of the affected wind turbine or otherwise optimize performance of the associated wind turbine. Being able to identify specific wind turbines in a wind farm, or specific blades of a wind turbine that actually need cleaning at a particular point in time can be helpful in optimizing the cost associated with blade service, cleaning and maintenance. This information can be used to schedule the cleaning so as to optimize the cost with respect to the number of turbines and/or blades. The information can also be stored and used to provide more accurate predictions in the future.

The wind turbine 100 includes a nacelle 102 and a rotor 106. Nacelle 102 is a housing mounted atop a tower 104, only a portion of which is shown in FIG. 1. The nacelle 102 includes a generator (not shown) disposed therewithin. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or offshore locations. The rotor 106 includes one or more turbine blades 108 attached to a rotatable hub 110. In this exemplary embodiment, the wind turbine 100 includes three turbine blades 108.

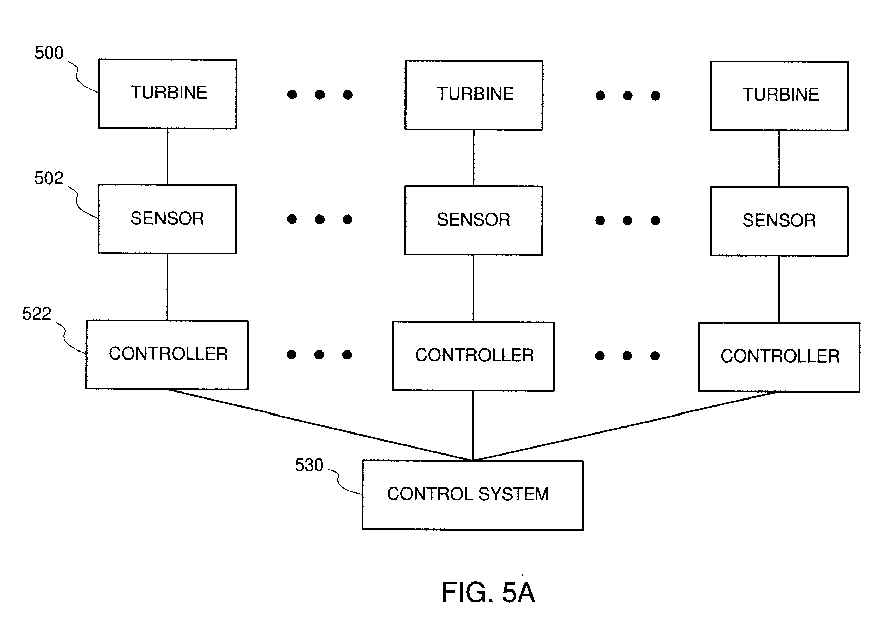

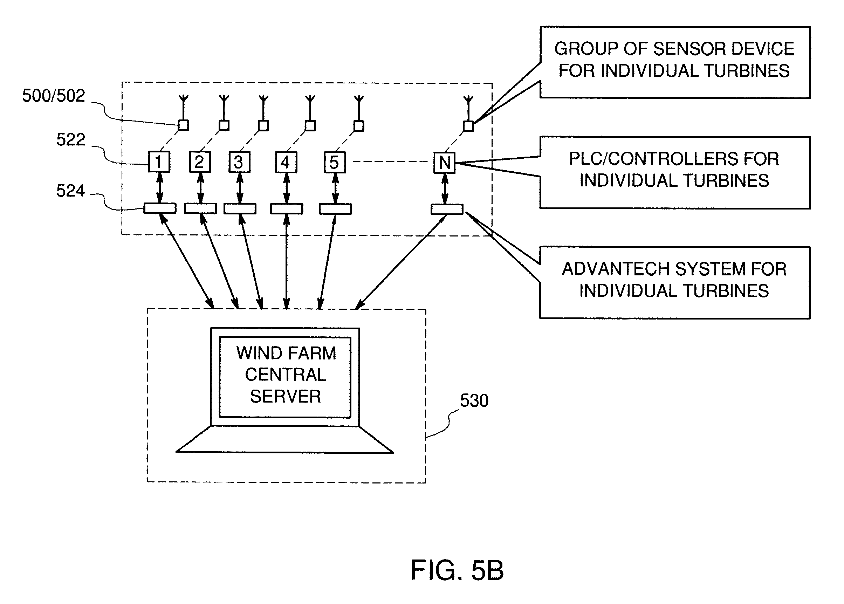

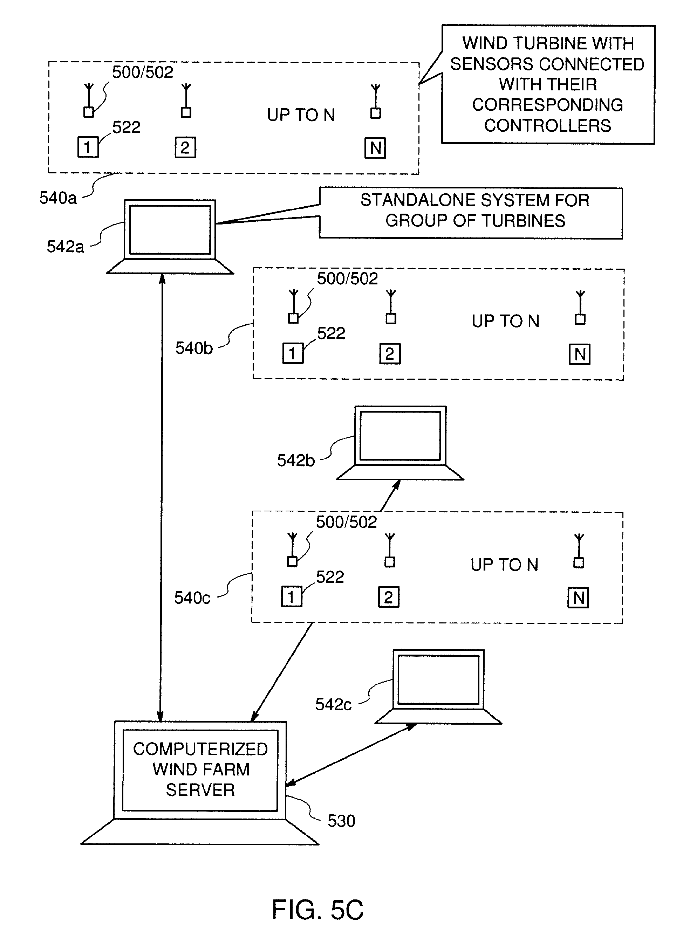

The wind turbine 100 includes a wind turbine control system, an example of which is generally shown in FIG. 5, which adjusts wind turbine functions to control power production of the wind turbine 100. The wind turbine control system includes hardware and software configured to perform turbine functions as appreciated by one of ordinary skill in the art. The wind turbine functions include, but are not limited to, regulation of blade rotational speed. The blade rotational speed may be controlled by adjusting parameters including the blade pitch and generator torque.

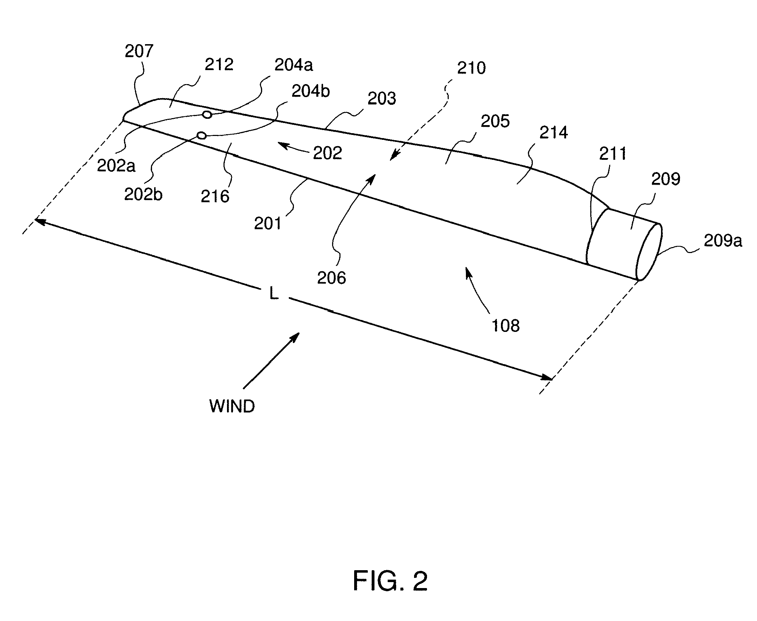

FIG. 2 illustrates an exemplary turbine blade 108 according to an embodiment of the present disclosure. The turbine blade 108 includes an airfoil portion 205 and a root portion 209. The airfoil portion 205 includes a leading edge 201, a trailing edge 203, a tip 207, and a root edge 211. The turbine blade 108 has a length L between the inner edge 209a of the root portion 209 and the tip 207. The root portion 209 is connectable to the hub 110 of the wind turbine 100 shown in FIG. 1.

As shown in FIG. 2, the turbine blade 108 includes foreign matter detection devices such as foreign matter detection sensors 202. In this example, two sensors 202a and 202b are used. Although two foreign matter detection sensors are shown on the turbine blade 108 shown in FIG. 2, in alternate embodiments, the turbine blade 108 can include any suitable number of foreign matter detection sensors 202, including more or less than two.

The foreign matter detection sensors 202a and 202b each comprise any suitable detector that is configured to detect an accumulation of foreign matter on a surface, such as the surface of the turbine blade 108. In one embodiment, the foreign matter detection sensors 202a, 202b comprise dust detection sensors, such as for example piezoelectric devices or transducer elements that generally work on frequency principles. In alternate embodiments, any detection or sensor device can be used that works on one or more of a combination of principles, such as for example, mechanical, electromagnetic, laser, electronic, ultrasonic, thermoelectric, frequency, resistance, conductivity, capacitance, optics, electrical or smart structure principles. These kinds of sensors or detection devices may include, but are not limited to transducers, capacitors, optical sensors, piezoelectric sensors, Wheatstone bridge, or any other suitable dust detection or foreign matter detection device or sensor. For example, when the sensor comprises a Wheatstone bridge sensor, a change in resistance in one leg of the bridge, due to deposition of foreign matter on the turbine blade surface, is measured. Another example is an optical sensor in a tiny glass enclosure where the electrical conductivity of the sensor varies with the amount of foreign matter that is deposited on the glass surface. As another example, two thin film metal pieces in the surface of the turbine blade act as capacitor plates, where the amount of foreign matter between the two film pieces acts as a dielectric, and changes the capacitance of the device.

Preferably, the placement of the sensors 202a, 202b on the turbine blade 108 will not disturb the aerodynamic shape of the turbine blade 108. Thus, the sensors 202a, 202b are preferably disposed on the surface 216 of the turbine blade panels, which are generally designed for buckling. In one embodiment, the sensors 202a, 202b are disposed in holes 204a, 204b that are formed on or in the blade surface 216. In one embodiment, the sensors 202a, 202b are disposed on the pressure side 206 of the turbine blade 108, which is facing the wind. In an alternate embodiment, the sensors 202a, 202b are disposed on the suction side 210 of the turbine blade 108. The pressure side 206 of the turbine blade 108 generally has more curvature when compared to the suction side 210. Due to the curvature of the pressure side 206 of turbine blade 108, there is more of a tendency for the pressure side 206 to accumulate dust and other foreign matter. Although the aspects of the embodiments disclosed herein are described with respect to the sensors 202a, 202b being disposed in holes 204a, 204b, in one embodiment, the sensors 202a, 202b can be placed on or over the blade surface 216 without making any holes. In this embodiment, the sensors 202a, 202b are extensions to the blade surface 216.

In a rotor blade, such as the turbine blade 108 shown in FIG. 2, the outboard region 212 of the turbine blade 108 is generally more critical for energy capture than the inboard region 214. Thus, the accumulation of foreign matter on the outboard region 212 will generally have a greater impact on the performance of the turbine blade 108. In the embodiment shown in FIG. 2, the sensors 202a, 202b are located on the outboard region 212. However, the aspects of the disclosed embodiments are not so limited, and in alternate embodiments, the sensors 202a, 202b can be disposed at any suitable location over the entire length L of the blade 108, including the inboard region 214, for example.

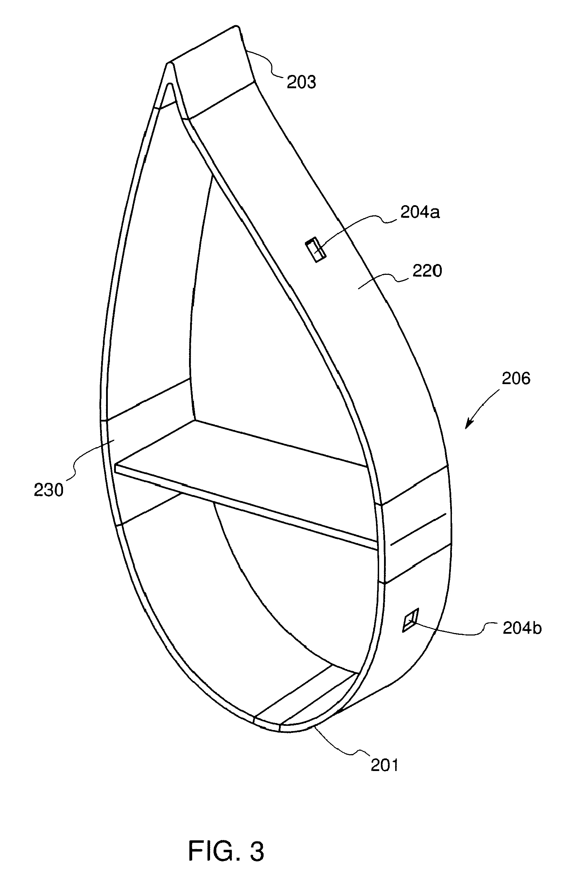

FIG. 3 is a perspective view of a section of the turbine blade 108 of FIG. 2. In this embodiment, the holes 204a, 204b are formed in the panel 220 of the blade 108 for locating or receiving the sensors 202a, 202b, respectively. In this example, the panel 220 defines the pressure side 206 of the turbine blade 108, and the holes 204a, 204b are disposed between the leading edge 201 and the trailing edge 203. Moreover, as clearly shown in FIG. 3, the holes 204a, 204b are preferably located outside of the spar cap 230.

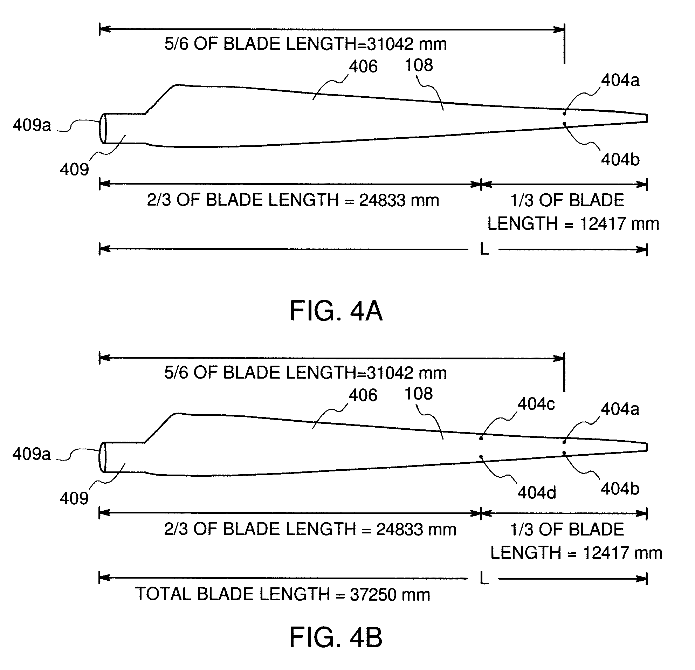

Additional examples of the positions of sensors, or sensor holes on a blade are shown in FIGS. 4A and 4B. In this example, the total length L of an exemplary blade 108 is approximately 37.25 m. In alternate embodiments, the total length L of blade 108 can be any suitable length for a chosen wind turbine. Although the sensors can be located at any suitable location over the total length L of the blade 108, and either the pressure or suction side, in the embodiment shown in FIG. 4A, two sensor holes, 404a, 404b, are located at positions that are approximately 5/6 of the blade length L (31.042 m) from the inner edge 409a of the root portion 409, and on the pressure side 406 of the blade 108. In FIG. 4B, four sensor holes 404a-404d are used. The sensor holes 404a, 404b are located at positions approximately 5/6 of the blade length L from the inner edge 409a of the root portion 409, which in this example is approximately 31.042 m. The other two sensor holes 404c, 404d are located at positions approximately 2/3 of the blade length L, or 24.833 m.

Various aspects of the disclosed embodiments provide for the automatic collection of data to monitor the accumulation of foreign matter such as dust on wind turbine blades. By identifying actual cleaning requirements, the aerodynamic shape of the turbine blade(s) 108 will be maintained and the life of the blade(s) 108 will be increased. Additionally, cleaning and maintenance costs can be minimized by only cleaning the blade(s) 108 when they need to be, as well as delaying cleanings so as to optimize costs with respect to the number of turbines and/or blades. The data related to the actual cleaning requirements can be collected, stored and used for future analysis and more accurate cleaning predictions. In one embodiment, referring to FIG. 5A, a block diagram of an exemplary wind farm that includes a plurality of wind turbines 500 is shown. The foreign matter detection sensors 502 associated with each wind turbine 500 are coupled to the controller 522 of the individual turbines 500. The controllers 522 can be located at each of the individual turbines or located remotely from the respective turbine. In one embodiment, the controller(s) 522 can be configured to receive, process and interpret the information received from the sensor(s) 502. The controller(s) 522 are in turn coupled to a control system 530, such as for example, a wind farm central server, which among other things, receives and interprets the information from each controller 522 relative to the data from sensors 502. The control system 530 can determine when blade cleaning is required and initiate appropriate processes. In one embodiment, the control system 530 is a centralized wind farm control system. In alternate embodiments, the individual controllers 522 can be coupled to standalone wind farm controllers, which are then coupled to a centralized system. The coupling between the various components shown in FIG. 5 can be any suitable connection for sending and receiving electronic data, including, but not limited to hardwire connections and wireless connections.

Although the disclosed embodiments are described with respect to the sensors 502 being coupled to controllers 522, in one embodiment, the sensors 502 associated with the individual turbines 500 can be directly connected to the control system 530. The data from each sensor 502 can be directly processed in the control system 530.

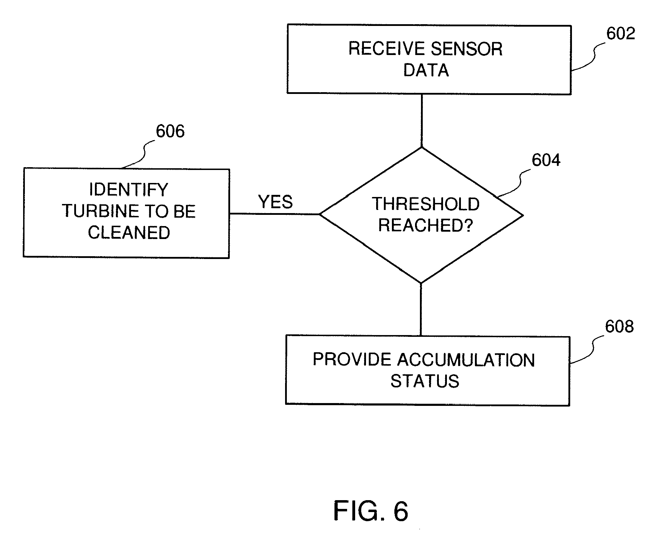

Based on the received sensor 502 data, the control system 530 can provide data and information related to the qualitative level of accumulated foreign matter on the blades 108 of a particular turbine 500. Alternatively, each controller 522 can be configured to interpret the data and information from the corresponding sensor(s) 502 and generate a cleaning signal if the data indicates that blade cleaning is required. For example, referring to FIG. 6, in one embodiment, sensor data related to a particular turbine 500 is received at step 602, either in the respective controller 522 or in the control system 530. The sensor data is the measurement of foreign matter accumulation on the blade, as detected by the sensor 502. In one embodiment, the measurement can be taken during normal operation of the turbine 500, so as to provide real-time foreign matter accumulation data. Generally, the sensor signals or data will be converted to a form that is compatible for communicating with the controller 522 and/or control system 530 either through hardwire or wireless communication protocols. The aspects of the disclosed embodiments are not intended to be limited by the particular signal format and communication protocol used.

In one embodiment, the level of foreign matter accumulation as indicated by the sensor 502 is compared at step 604 to a threshold level. The threshold level is generally a level at which cleaning of the turbine blade 108 is indicated. In one embodiment, the threshold limit will be obtained or determined based on a relationship between the quantity of foreign matter accumulation and the corresponding AEP reduction. The threshold level can be determined in terms of the predetermined percent reduction in AEP. The AEP is an estimate of a turbine output in a wind farm that the turbine will produce a certain amount of energy annually. In alternate embodiments, any suitable method for determining a threshold level can be used. Other examples of threshold level determination can include, but are not limited to, predetermined percent reductions in blade aerodynamic efficiency due to changes in aerodynamic shape due to foreign matter accumulation, sticking or buildup, predetermined percent reduction in power production, turbine performance or efficiency or test data or field experience. Although the disclosed embodiments are described with respect to a threshold level, in alternate embodiments, the sensor signal can be used to provide a relative level or indication of foreign matter accumulation or performance data. In one embodiment, this information or data can be directly displayed on the control system 530 display or user interface.

In one embodiment, if the threshold level is met or exceeded, the turbine is identified at step 606 for cleaning. This can include, for example, identifying the particular turbine on a user interface of the control system 530, initiating an automatic shutdown and/or cleaning process, or sounding an alarm. If the threshold level is not met, the turbine 500 can be left to its continued operation and/or its status at step 608. The operational status can be shown by a display. For example, in a wind farm control system, there can be a display indicator for each wind turbine 500. The operational status of each turbine can be identified on a display of the control system 530. In one embodiment, the display can be color coded so as to be able to easily identify or distinguish turbines that need cleaning, or are in the process of being cleaned, from turbines that do not. For example, in one embodiment, the system will provide a color coded live plot for each turbine 500 in the system, with a corresponding indication of foreign matter accumulation on each turbine. The level of foreign matter accumulation or buildup can be presented using different colors for different accumulation levels. Thus, one looking at the display can easily distinguish turbines that require cleaning or attention from turbines that do not. In alternate embodiments, any suitable method of distinguishing turbines can be used. Additionally, the current level of foreign matter accumulation can be indicated for each turbine so that performance and other factors can be monitored.

In one embodiment, referring to FIG. 5B, each controller 522 can be coupled to a local computer system 524 that is in turn connected or coupled to a centralized wind farm server 530. The server 530 can be configured to retrieve the signals and real-time data from the local computer system 524.

FIG. 5C illustrates an embodiment where groups 540a-540c of turbines 500 with sensors 502 connected with their corresponding controllers 522 are coupled to respective ones of standalone computer systems 542a-542c. The computer systems 542a-542c are coupled to the control system 530. Although only three groups are shown in FIG. 5C, the aspects of the disclosed embodiments are not so limited, and in alternate embodiments, the system can include any suitable number of groups. Each computer system 542a-542c processes the signals from respective ones of the sensors 502. This data is then transmitted to the control system 530 for further processing as is described herein.

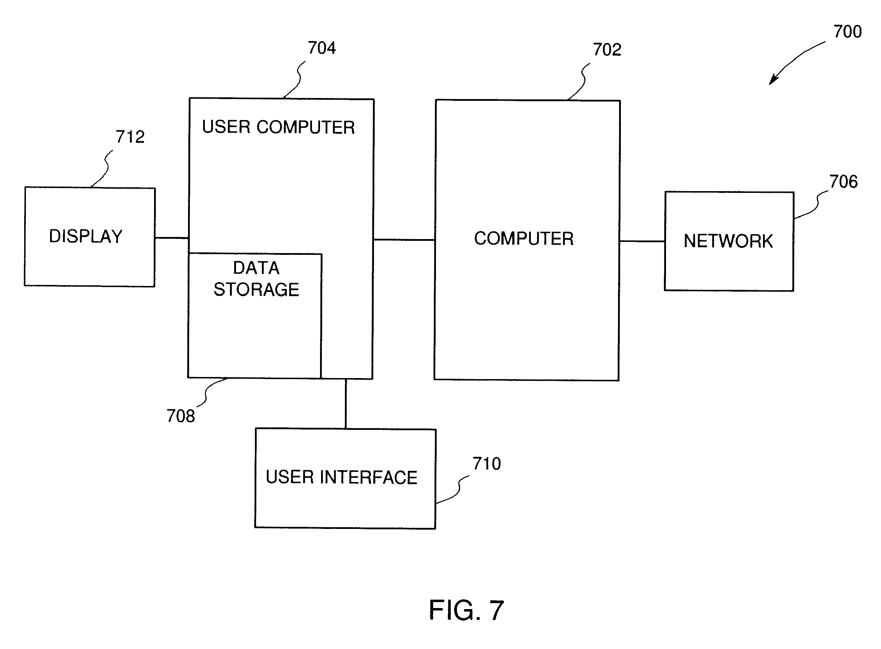

The disclosed embodiments may also include software and computer programs incorporating the process steps and instructions described above. In one embodiment, the programs incorporating the process steps described herein can be stored on or in a computer program product and executed in one or more computers. FIG. 7 is a block diagram of one embodiment of a typical apparatus 700 incorporating features that may be used to practice aspects of the invention. The apparatus 700 can include computer readable program code means stored on a computer readable storage medium for carrying out and executing the process steps described herein. In one embodiment the computer readable program code is stored in a memory of the apparatus 700. In alternate embodiments the computer readable program code can be stored in memory or memory medium that is external to, or remote from, the apparatus 700. The memory can be direct coupled or wireless coupled to the apparatus 700.

As shown, a computer system or controller 702 may be linked to another computer system or controller 704, such that the computers 702 and 704 are capable of sending information to each other and receiving information from each other. In one embodiment, the computer system 702 could include a server computer or controller adapted to communicate with a network 706. Alternatively, where only one computer system is used, such as the computer system 704, it will be configured to communicate with and interact with the network 706. Computer systems 704 and 702, such as the controller(s) 522 and control system 530 of FIG. 5, can be linked together in any conventional manner including, for example, a modem, wireless, hard wire connection, or fiber optic link. Generally, information, such as the data from the sensors 502 can be made available to one or both computer systems 702 and 704 using a communication protocol typically sent over a communication channel or other suitable connection or line, communication channel or link. In one embodiment, the communication channel comprises a suitable broadband communication channel.

The computer systems 702 and 704 are generally adapted to utilize program storage devices embodying machine-readable program source code, which is adapted to cause the computer systems 702 and 704 to perform the method steps and processes disclosed herein. The program storage devices incorporating aspects of the disclosed embodiments may be devised, made and used as a component of a machine utilizing optics, magnetic properties and/or electronics to perform the procedures and methods disclosed herein. In alternate embodiments, the program storage devices may include magnetic media, such as a diskette, disk, memory stick or computer hard drive, which is readable and executable by a computer. In other alternate embodiments, the program storage devices could include optical disks, read-only-memory ("ROM") floppy disks and semiconductor materials and chips.

The computer systems 702 and 704 may also include a microprocessor for executing stored programs. The computer system 704 may include a data storage or memory device 708 on its program storage device for the storage of information and data. The computer program or software incorporating the processes and method steps incorporating aspects of the disclosed embodiments may be stored in one or more computer systems 702 and 704 on an otherwise conventional program storage device. In one embodiment, the computer systems 702 and 704 may include a user interface 710, and/or a display interface 712, such as a graphical user interface, from which aspects of the disclosed embodiments can be presented and/or accessed. The user interface 710 and the display interface 712, which in one embodiment can comprise a single interface, can be adapted to allow the input of queries and commands to the systems, as well as present the results of the analysis of the sensor data, as described with reference to FIGS. 5 and 6, for example.

Thus, while there have been shown, described and pointed out, fundamental novel features of the invention as applied to the exemplary embodiments thereof, it will be understood that various omissions and substitutions and changes in the form and details of devices illustrated, and in their operation, may be made by those skilled in the art without departing from the spirit of the invention. For example, although each turbine blade of a wind turbine can have its own foreign matter detection device, it is possible to use one or more foreign matter detection devices on only one of the turbine blades. Moreover, it is expressly intended that all combinations of those elements and/or method steps, which perform substantially the same function in substantially the same way to achieve the same results, are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

Various aspects and embodiments of the present invention are defined by the following numbered clauses:
1. A wind turbine comprising:
   a wind turbine blade; and
   a foreign matter detection device disposed on the wind turbine blade for detecting an accumulation of foreign matter on the wind turbine blade.
2. The wind turbine of clause 1, further comprising a controller coupled to the foreign matter detection device and configured to determine when a predetermined threshold level of foreign matter accumulation is reached.
3. The wind turbine of any preceding clause, wherein the wind turbine blade comprises a pressure side and a suction side, the foreign matter detection device being disposed on the pressure side of the wind turbine blade.
4. The wind turbine of any preceding clause, wherein the wind turbine blade comprises a pressure side and a suction side, the foreign matter detection device being disposed on the suction side of the wind turbine blade.
5. The wind turbine of any preceding clause, wherein the wind turbine blade comprises a panel having a hole, the foreign matter detection device being disposed in the hole.
6. The wind turbine of any preceding clause, wherein the panel comprises a spar cap, the hole being disposed outside of the spar cap.
7. The wind turbine of any preceding clause, wherein the pressure side comprises an inboard region and an outboard region, the foreign matter detection device being disposed in the outboard region.
8. The wind turbine of any preceding clause, wherein the wind turbine blade has a length L and an inner edge, the foreign matter detection device being disposed at a position approximately 2/3 of the length L from the inner edge.
9. The wind turbine of any preceding clause, wherein the wind turbine blade has a length L and an inner edge, the foreign matter detection device being disposed at a position approximately 5/6 of the length L from the inner edge.
10. The wind turbine of any preceding clause, wherein the wind turbine blade comprises an inboard region and an outboard region, the foreign matter detection device being disposed in one of the inboard region or outboard region of the wind turbine blade.
11. The wind turbine of any preceding clause, wherein the foreign matter detection device uses frequency, resistance, conductivity or capacitance to measure foreign matter accumulation on the wind turbine blade.
12. The wind turbine of any preceding clause, wherein the foreign matter detection device comprises a piezoelectric sensor, an optical sensor, or a transducer element.
13. A wind farm system comprising:
   a plurality of wind turbines, each of the wind turbines comprising:
      a wind turbine blade rotatable about an axis upon an impact of a wind flow on the wind turbine blade;
      a foreign matter detection device disposed on the wind turbine blade for detecting an accumulation of foreign matter on the wind turbine blade; and
      a controller configured to receive foreign matter accumulation data from the foreign matter detection device.
14. The wind farm system of any preceding clause, wherein the wind turbine blade comprises a pressure side and a suction side, the foreign matter detection device being disposed on the pressure side.
15. The wind farm system of any preceding clause, wherein the pressure side comprises an inboard region and an outboard region, the foreign matter detection device being disposed in the outboard region.
16. The wind farm system of any preceding clause, wherein the foreign matter detection device comprises a piezoelectric sensor, an optical sensor or a transducer element.
17. A method of monitoring foreign matter accumulation on a blade surface of a wind turbine blade, the method comprising:
   receiving an indication of a level of foreign matter accumulation on the blade surface from a foreign matter detection device disposed on the blade surface; and
   determining if the indicated level of foreign matter accumulation exceeds a threshold level.
18. The method of any preceding clause, further comprising initiating a blade cleaning process if the indicated level of foreign matter accumulation exceeds the threshold level.
19. The method of any preceding clause, wherein the blade surface is on a pressure side of the wind turbine blade, the foreign matter detection device being disposed in an outboard region of the pressure side.
20. The method of any preceding clause, wherein the level of foreign matter accumulation on the blade surface is received on a real-time basis.

## Claims

1. A wind turbine (100) comprising:
a wind turbine blade (108); and
a foreign matter detection device (202) disposed on the wind turbine blade (108) for detecting an accumulation of foreign matter on the wind turbine blade (108).

2. The wind turbine (100) of claim 1, further comprising a controller (522) coupled to the foreign matter detection device (202) and configured to determine when a predetermined threshold level of foreign matter accumulation is reached.

3. The wind turbine (100) of any preceding claim, wherein the wind turbine blade (108) comprises a pressure side (206) and a suction side (210), the foreign matter detection device (202) being disposed on one of the pressure side (206) and the suction side (210).

4. The wind turbine (100) of any preceding claim, wherein the wind turbine blade (108) comprises a panel (220) having a hole (204a, 204b, 404a-404d), the foreign matter detection device (202) being disposed in the hole (204a, 204b, 404a-404d).

5. The wind turbine (100) of claim 4, wherein the panel (220) comprises a spar cap (230), the hole (204a, 204b, 404a-404d) being disposed outside of the spar cap (230).

6. The wind turbine (100) of any preceding claim, wherein the foreign matter detection device (202) uses frequency, resistance, conductivity or capacitance to measure foreign matter accumulation on the wind turbine blade (108).

7. The wind turbine (100) of any preceding claim, wherein the foreign matter detection device (202) comprises a piezoelectric sensor (502), an optical sensor (502), or a transducer element.

8. A wind farm system comprising:
a plurality of wind turbines (100), each of the wind turbines (100) comprising:
a wind turbine blade (108) rotatable about an axis upon an impact of a wind flow on the wind turbine blade (108);
a foreign matter detection device (202) disposed on the wind turbine blade (108) for detecting an accumulation of foreign matter on the wind turbine blade (108); and
a controller (522) configured to receive foreign matter accumulation data from the foreign matter detection device (202).

9. A method of monitoring foreign matter accumulation on a blade (108) surface of a wind turbine blade (108), the method comprising:
receiving (602) an indication of a level of foreign matter accumulation on the blade (108) surface from a foreign matter detection device (202) disposed on the blade (108) surface; and
determining (604) if the indicated level of foreign matter accumulation exceeds a threshold level.

10. The method of claim 9, further comprising initiating a blade cleaning process if the indicated level of foreign matter accumulation exceeds the threshold level.
